# EUROPEAN PATENT APPLICATION

(11) **EP 4 434 597 A2**
(43) Date of publication of application: **25.09.2024**
(21) Application number: 24160192.1
(22) Date of filing: 28.02.2024
(51) Int. Cl.: A63F 13/63, A63F 13/44, A63F 13/213, A63F 13/814

(54) **PLAYER-TRACKING VIDEO GAME EDITOR**

(30) Priority: 23.03.2023 US 202318188915
(71) Applicant: Meta Platforms Technologies, LLC, Menlo Park, CA 94025 (US)
(72) Inventor: Mirovský, Jakub, Prague (CZ); Ilavský, Ján, Prague (CZ); Joynes, Joshua, Prague (CZ); Osanec, Matej, Prague (CZ); Hrin ár, Peter, Tlustice (CZ)
(74) Representative: Murgitroyd & Company

(57) **Abstract**

Aspects of the present disclosure are directed to a player-tracking video game editor used to modify a three-dimensional virtual game space corresponding to a song. In some implementations, the editor can be used to control lighting effects for multiple lights in the virtual game space, without having to change each light individually. In some implementations, the editor can be used to add arcs (i.e., lines between two blocks intended to emphasize long sounds) and/or chains (i.e., multiple digital targets between two blocks causing multiple haptics effects) in the virtual game space corresponding to the song. In some implementations, the editor can provide a beats-per-minute (BPM) tool that can visualize an audio signal of a song for easy identification of beats. In some implementations, the editor can provide a real-time preview of modifications to the virtual game space, without requiring execution of the video game outside of the editor.

## Description

### TECHNICAL FIELD

The present disclosure is directed to editing video games, and more specifically, to an editor for creating and modifying video games that track the movements of a player.

### BACKGROUND

A player-tracking video game is one where a user's movements (e.g., of their head, body, arms, wrists, hands, or legs) provide meaningful controls to the game. Player-tracking games take a variety of forms and often include music video games.

A music video game is a video game where the gameplay is meaningfully oriented around the player's interactions with a musical score or individual songs. Music video games may take a variety of forms and are often grouped with puzzle games due to their common use of "rhythmically generated puzzles". Music video games are distinct from purely audio games in that they feature a visual feedback, to lead the player through the game's soundtrack, although eidetic music games can fall under both categories.

### SUMMARY OF INVENTION

In accordance with the invention in a first aspect, a method for editing a three-dimensional virtual game space corresponding to a song in a player-tracking video game editor, the method comprising:
rendering a modifiable instance of the three-dimensional virtual game space corresponding to the song in the player-tracking video game editor, the modifiable instance including multiple visual markers corresponding to respective beats of the song, the multiple visual markers each having multiple lighting effects for multiple lights controllable within the modifiable instance;
receiving a lighting modification command corresponding to a visual marker of the multiple visual markers, the lighting modification command being to add, edit, or remove one or more lighting effects of the multiple lighting effects corresponding to the visual marker;
translating the lighting modification command into a group lighting event, the group lighting event controlling either A) two or more lights of the multiple lights, within the modifiable instance, at a beat of the song corresponding to the visual marker, B) one or more lights of the multiple lights, within the modifiable instance, over multiple beats of the song corresponding to respective visual markers, the multiple beats including the beat corresponding to the visual marker, or C) both;
modifying the modifiable instance of the three-dimensional virtual game space to include the group lighting event; and
generating a preview of the three-dimensional virtual game space including the group lighting event at least at the beat corresponding to the visual marker, the preview being displayed from within the player-tracking video game editor.

In some embodiments of the method, the preview may be generated from multiple angles within the three-dimensional virtual game space.

In some embodiments, the three-dimensional virtual game space may be edited on a two-dimensional interface, and the preview may be displayed on the two-dimensional interface.

In some embodiments, the preview of the three-dimensional virtual game space including the group lighting event further includes an audible sample of the song that comprises at least the beat corresponding to the visual marker, the preview of the group lighting event being synchronized with audio of the beat corresponding to the visual marker.

In some embodiments, the preview is generated instantaneously with modification of the modifiable instance of the three-dimensional virtual game space to include the group lighting event.

In some embodiments, the group lighting event controls at least one of color, brightness, rotation, duration, filter, placement, scaling, strobing, duplication, or any combination thereof, of either A) the two or more lights of the multiple lights, within the three-dimensional virtual game space, at the beat of the song corresponding to the visual marker, B) the one or more lights of the multiple lights, within the three-dimensional virtual game space, over multiple beats of the song corresponding to respective visual markers, the multiple beats including the beat corresponding to the visual marker, or C) both.

In some embodiments, the lighting modification command is triggered automatically in response to one or more features of either the beat, the song, or both.

In some embodiments, the visual marker is associated with a digital target, and wherein the method further comprises: storing the three-dimensional virtual game space including the group lighting event; and transmitting the stored three-dimensional virtual game space including the group lighting event to a host computing system; wherein one or more artificial reality devices access the stored three-dimensional virtual game space via the host computing system and render the three-dimensional virtual game space, and wherein the group lighting event is dynamic based upon one or more detected contacts with the digital target via respective artificial reality devices.

In some embodiments, the visual marker is associated with a digital target, and the method further comprises: storing the three-dimensional virtual game space including the group lighting event; and transmitting the stored three-dimensional virtual game space including the group lighting event to a host computing system; wherein multiple artificial reality devices access the three-dimensional virtual game space via the host computing system and render the three-dimensional virtual game space, and wherein the group lighting event is rendered via a first rendering style in response to a first detected contact with the digital target, and wherein the group lighting event is rendered via a second rendering style in response to a second detected contact with the digital target.

In some embodiments, the first detected contact with the digital target includes at least one of angle of the first detected contact, placement of the first detected contact, orientation of the first detected contact, or any combination thereof.

In accordance with the invention in a second aspect, a computer-readable storage medium is provided storing instructions that, when executed by a computing system, cause the computing system to perform a process for editing a three-dimensional virtual game space in a player-tracking video game editor, the process comprising:
rendering a modifiable instance of the three-dimensional virtual game space, the modifiable instance including multiple visual markers indicating respective beats of a song, the multiple visual markers each having multiple lighting effects for multiple lights controllable within the modifiable instance;
receiving a lighting modification command corresponding to a visual marker of the multiple visual markers, the lighting modification command being to add, edit, or remove the lighting effect corresponding to the visual marker in the modifiable instance at a beat corresponding to the visual marker;
translating the lighting modification command into a group lighting event, the group lighting event controlling two or more lights of the multiple lights at the beat corresponding to the visual marker; and
modifying the modifiable instance of the three-dimensional virtual game space to include the group lighting event.

The computer-readable storage medium of the second aspect for example stores instructions that, when executed by a computing system, cause the computing system to perform a process for editing a three-dimensional virtual game space in a player-tracking video game editor, the process comprising the method of the first aspect and further possible features of the process will be understood by analogy.

For example, in some embodiments, the process further comprises generating a preview of the three-dimensional virtual game space including the group lighting event at least at the beat corresponding to the visual marker, the preview being displayed from within the player-tracking video game editor.

In some embodiments, the three-dimensional virtual game space is edited on a two-dimensional interface, and the preview is displayed on the two-dimensional interface.

In some embodiments, the preview of the three-dimensional virtual game space including the group lighting event further includes an audible sample of the song that comprises at least the beat corresponding to the visual marker, the preview of the group lighting event being synchronized with audio of the beat corresponding to the visual marker.

In some embodiments, the visual marker is associated with a digital target, and the process further comprises: storing the three-dimensional virtual game space including the group lighting event; and transmitting the stored three-dimensional virtual game space including the group lighting event to a host computing system; wherein multiple artificial reality devices access the three-dimensional virtual game space via the host computing system and render the three-dimensional virtual game space, and wherein the group lighting event is rendered via a first rendering style in response to a first detected contact with the digital target, and wherein the group lighting event is rendered via a second rendering style in response to a second detected contact with the digital target.

In some embodiments, the first detected contact with the digital target includes at least one of angle of the first detected contact, orientation of the first detected contact, or both.

In accordance with the invention in a third aspect, a computing system for editing a three-dimensional virtual game space in a player-tracking video game editor is provided, the computing system comprising:
one or more processors; and
one or more memories storing instructions that, when executed by the one or more processors, cause the computing system to perform a process comprising:
   rendering a modifiable instance of the three-dimensional virtual game space, the modifiable instance including multiple visual markers indicating respective beats of a song, the multiple visual markers each having multiple lighting effects for multiple lights controllable within the modifiable instance;
   receiving a lighting modification command corresponding to a visual marker of the multiple visual markers, the lighting modification command being to add, edit, or remove the lighting effect corresponding to the visual marker in the modifiable instance at a beat corresponding to the visual marker;
   translating the lighting modification command into a group lighting event, the group lighting event controlling two or more lights of the multiple lights at the beat corresponding to the visual marker; and
   modifying the modifiable instance of the three-dimensional virtual game space to include the group lighting event.

The computing system of the third aspect for example comprises one or more memories storing instructions that, when executed by the one or more processors, cause the computing system to perform a process comprising the method of the first aspect and further possible features of the process will be understood by analogy.

For example, in some embodiments, the process further comprises generating a preview of the three-dimensional virtual game space including the group lighting event at least at the beat corresponding to the visual marker, the preview being displayed from within the player-tracking video game editor.

In some embodiments, the preview is generated instantaneously with execution of the group lighting event.

In some embodiments, the lighting modification command is triggered automatically in response to one or more features of either the beat, the song, or both.

Aspects of the disclosure relating to the method of the first aspect, the computer-readable storage medium implementing the process of the second aspect and the system implementing the process of the third aspect will be understood to relate to one another and features of the said method and process will be understood to apply across all aspects by analogy where technically feasible.

Aspects of the present disclosure are directed to an editor that allows for ease of creating and editing levels in a player-tracking video game. For example, the player tracking video game can present the player with a stream of approaching digital objects and the user can cause a user-controlled digital element (e.g., a virtual saber) to collide with the digital objects based on use of body tracking. A user can generate and/or edit levels of the play tracking video game to display variations of backgrounds, lighting effects, digital elements patterns, and the like. Some implementations provide: A) lighting editing, B) arcs and chains among digital objects, C) a BPM tool, and D) previewing of edits. With respect to A) lighting editing, some implementations allow multiple lights to be controlled together instead of individually, including their brightness, color, rotation, conflation, position in three-dimensional (3D) space, etc. With respect to B) arcs and chains creation, some implementations provide a control scheme for how to place and modify arcs (e.g., long lines between two digital objects (e.g., song beats) emphasizing longer sounds) and chains (e.g., segments sliced into pieces that cause vibrations having sensations of more than a single hit). With respect to C) the beat-per-minute (BPM) tool, implementations help users identify a corresponding BPM at certain parts of songs using a visualization of the audio signal and a metronome, which is particularly useful for songs with variable BPMs (e.g., in classic rock music). By finding the corresponding BPM, blocks, lighting effects, etc. can more accurately correspond to the beats of the songs. With respect to D) previewing of edits, some implementations allow users to preview their edits in real-time from different angles, without having to go into and execute the game, so that the user can both view and continue to edit the level within the editor.

Some implementations can provide a process for adding, editing, or removing lighting effects in a three-dimensional (3D) virtual game space by a player-tracking video game editor. In some implementations, the player-tracking video game editor can be accessed from a two-dimensional (2D) interface, such as a computing device. The player-tracking video game editor can render a modifiable instance of the 3D virtual game space corresponding to the song, such as an instance that a user can edit via the video game editor. The modifiable instance can include visual markers corresponding to beats of the song. One or more visual markers can include lighting effects available to be controlled. The player-tracking video game editor can receive a lighting modification command to add, edit, or remove a lighting effect corresponding to a visual marker. The player-tracking video game editor can translate the lighting modification command into a group lighting event that controls either multiple lights at the visual marker (i.e., at a particular beat of the song), or a single or multiple lights at more than one visual marker (i.e., over multiple beats of the song). A user can modify the instance of the 3D virtual game space via the player-tracking video game editor to include the group lighting event.

In some implementations, the player-tracking video game editor alternatively or additionally can be used to add arcs and/or chains in the 3D virtual game space. The player-tracking video game editor can render the modifiable instance of the 3D virtual game space with lanes intersecting the visual markers, e.g., making a grid in which blocks can be placed in a lane at or between visual markers. In a simplified example, a user can add two blocks via the player-tracking video game editor, each at a respective lane and visual marker. The user can then connect the two blocks with an arc. For example, , during gameplay the arc can be configured to receive user interaction along its path between the two blocks when the player-tracking video game is executed, e.g., to emphasize longer sounds in the song.

In some implementations, the user can, via the player-tracking video game editor, connect the two blocks with a chain. The chain can include multiple digital targets between the two blocks, such that during gameplay haptics (or other effects, such as lighting or sound effects) can be triggered at each digital target within the chain. The haptics or other effects can provide the user a feel or sensation that simulates multiple digital targets being hit quickly.

In some implementations, the player-tracking video game editor can alternatively or additionally include a beats-per-minute (BPM) tool that helps a user identify beats in the song. This can be particularly useful for songs having a variable BPM, an inconsistent BPM, pauses within the song with no beats, etc. The player-tracking video game editor can render a modifiable instance of the 3D virtual game space with visual markers corresponding to predicted beats of the song (i.e., at the BPM indicated for the song and/or automatically detected for the song). In addition, the player-tracking video game editor can display a visual representation of an audio waveform representative of the song. The visual representation can include multiple beat indicators that correspond to respective visual markers within the modifiable instance of the 3D virtual game space. For example, the multiple beat indicators can be aligned with the predicted beats of the song in the audio waveform. This correspondence between the visual representation of the waveform and the instance of the 3D virtual game space aids the user in modifying the instance. For example, the user can move a beat indicator from a predicted beat to align with a user-identified beat of the song, as identified at least partially from the visual representation of the audio waveform. In this example, the user's visual inspection and modification can correct the predicted placement for beat indicators to align with the corresponding beats.

In some implementations, beat identification and alignment can also be confirmed by audibly playing the song. For example, the user can, via the player-tracking video game editor and the visual representation of the audio waveform, align the beat indicator with a user-identified beat, . The user can further modify, via the player-tracking video game editor, a visual marker associated with the predicted beat in accordance with the aligned beat indicator in the modifiable instance of the 3D virtual game space.

In some implementations, the player-tracking video game editor can provide a preview of modifications to the 3D virtual game space, without requiring a user to exit the editor and execute the player-tracking video game. For example, when the player-tracking video game editor is executed on a 2D interface, the editor can display the preview from multiple angles on the 2D interface without requiring the user to don a 3D interface compatible device (e.g., an artificial reality (XR) device, such as an XR head-mounted display (HMD)). For example, the user can, via input to the player-tracking video game editor, modify a lighting effect in a modifiable instance of the 3D virtual game space, modify a block in the modifiable instance of the 3D virtual game space corresponding to a digital target, connect two blocks corresponding to respective digital target (such as in an arc and/or chain), modify the placement of a visual marker (e.g., to align with a user-identified beat in a song), and/or the like. In response to the user's input, the player-tracking video game editor can modify the instance of the 3D virtual game space and generate a preview of the 3D virtual game space (and, in some implementations, as the modification is made). In some implementations, the preview can include sound (e.g., the portion of the song corresponding to the modification).

Once the player-tracking video game (the "game") is produced, gameplay involves a player interacting with digital objects (e.g., digital targets) that approach the user in a three-dimensional (3D) corridor. Interaction can occur via digital collision between a digital element controlled by the player. Control of the digital element can be based on body tracking. In some implementations, body tracking can be performed via a worn or held peripheral that tracks its own movement relative some other reference point, such as a controller. In some embodiments, a depth camera or room-mapping cameras can capture video of the player and use computer vision techniques to identify body positions of the user. The game can present the player with a stream of approaching digital objects and the user causes the digital element to collide with the digital objects based on use of body tracking. Digital collisions with different types of digital objects and from different angles can cause a variety of game actions to occur. In some implementations, the game can further track the motion of the user's body and shift a player location in game corresponding to body movements. Movement of the player location can enable the player to avoid digital obstacles.

Some implementations of the disclosure are related to a rhythm-based video game. In the rhythm-based video game, a player can slash blocks representing musical beats using one or a pair of energy blades resembling a lightsaber (e.g., a digital element). A gaming console can render multiple digital objects, e.g., a digital representation of a block ("digital block" or "block") such as a digital target, that are moving in a specified direction, e.g., in a direction towards a user or player. The gaming console can also render a digital representation of an instrument, e.g., a digital representation of a sword resembling a lightsaber ("digital saber"), using which the player can slash, cut or otherwise interact with the digital blocks to cause a digital collision between the digital saber and the digital blocks. The game can present the player with a stream of approaching digital blocks in synchronization with beats of music, e.g., a song's beats and notes, being played in the game. As the beat picks up in the music, the pace at which the digital blocks approach the player can increase.

A game action can occur in response to the digital collision. The game action can be any of an increase or decrease in score of the player, an increase or decrease in energy of the player, a gain or loss of life of the player in the game, an increase or decrease in a rate at which the score changes, an increase or decrease in the pace at which the blocks move towards the player, a certain lighting effect being applied, etc. The game can end based on multiple factors, such as after a specified time period, when the player runs out of energy or lives, or when the player issues a command to stop the game. The video game can be implemented as a two-dimensional (2D) video game or a 3D video game, such as an XR video game. In some embodiments, the gaming console can be configured to implement the video game as a VR game. Further details regarding player-tracking video games can be found in U.S. Patent Application No. 16/195,498, filed November 19, 2018, entitled, "Player-tracking video game," which is herein incorporated by reference in its entirety.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

Implementations can provide specific technological improvements in the field of video game editing. For example, some implementations can translate a single light editing command into a group lighting event, such that changes to a light made at one visual marker can be applied to other visual markers, and/or can be applied to other lights. Thus, some implementations improve speed and efficiency in editing a video game, as they require less commands to make changes. In addition, the arcs and chains described herein in some implementations can provide user interactions with virtual objects other than blocks, providing a different and more nuanced user experience. For example, the arcs and chains can generate new variations of gameplay that enhance the user's enjoyment of the video game.

Some implementations provide a beats-per-minute (BPM) tool that allows a user to easily and quickly identify the correct beats in a song, which can be incorrectly predicted in songs with variable BPMs. Thus, applied effects can be aligned with the beat of the song, improving cohesiveness between audio, visual, and/or haptics effects to improve user experience in the player-tracking video game. In addition, some implementations provide previewing within the player-tracking video game editor, such that it is not necessary to exit the editor and execute the game in order to see the changes. In some implementations in which the editor is on a 2D interface and the game is a 3D virtual game, some implementations therefore allow a user to preview modifications on the 2D interface from various angles, without having to don a 3D interface, such as an artificial reality (XR) device (e.g., an XR head-mounted display (HMD)) to preview the XR experience.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a flow diagram illustrating a process used in some implementations of the present technology for adding, editing, or removing lighting effects in a three-dimensional virtual game space.
Figure 6 is a conceptual diagram illustrating an example preview from a player-tracking video game editor of lighting effect modifications in a three-dimensional virtual game space.
Figure 7 is a flow diagram illustrating a process used in some implementations of the present technology for adding arcs and/or chains in a three-dimensional virtual game space.
Figure 8 is a conceptual diagram illustrating an example preview from a player-tracking video game editor of an arc addition in a three-dimensional virtual game space.
Figure 9 is a conceptual diagram illustrating an example preview from a player-tracking video game editor of chain additions in a three-dimensional virtual game space.
Figure 10 is a flow diagram illustrating a process used in some implementations of the present technology for correcting beat predictions for a song in a player-tracking video game.
Figure 11 is a conceptual diagram illustrating an example view from a beats-per-minute (BPM) editor of a visual representation of an audio waveform corresponding to a song in a player-tracking video game.
Figure 12 is a flow diagram illustrating a process used in some implementations of the present technology for previewing edits to a three-dimensional virtual game space.

The techniques introduced here may be better understood by referring to the following Detailed Description in conjunction with the accompanying drawings, in which like reference numerals indicate identical or functionally similar elements.

### DETAILED DESCRIPTION

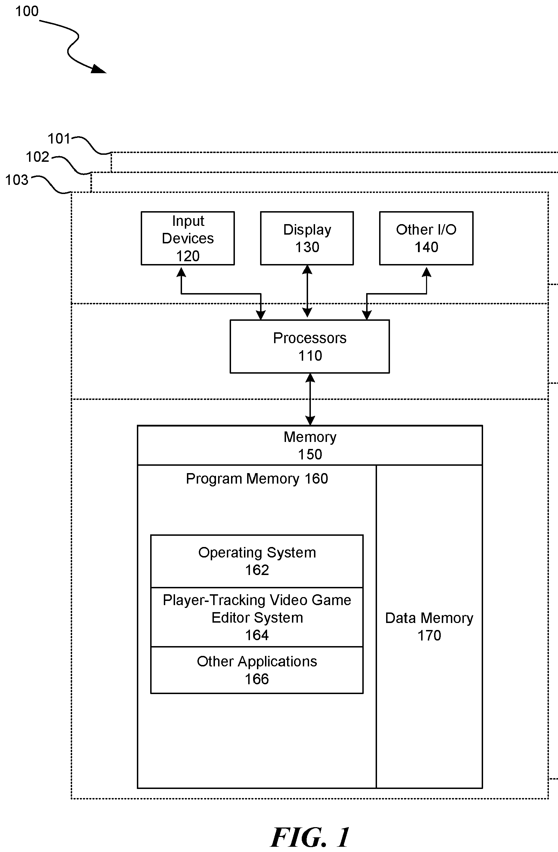

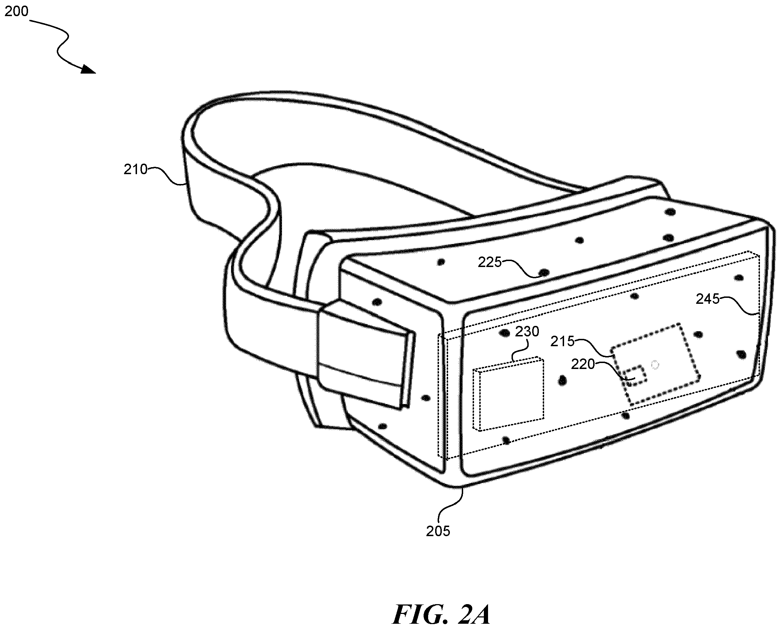

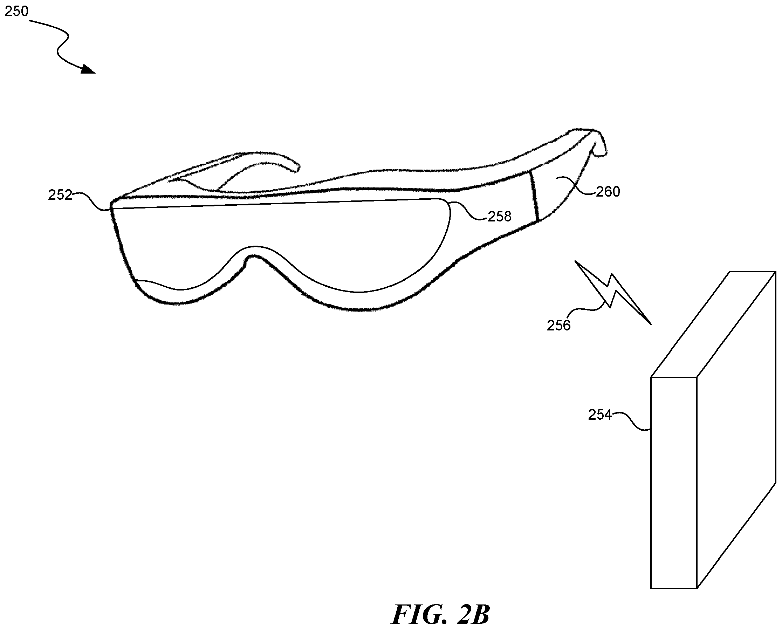

Several implementations are discussed below in more detail in reference to the figures. Figure 1 is a block diagram illustrating an overview of devices on which some implementations of the disclosed technology can operate. The devices can comprise hardware components of a computing system 100 that can edit a three-dimensional (3D) virtual game space corresponding to a song. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, girds, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, player-tracking video game editor system 164, and other application programs 166. Memory 150 can also include data memory 170 that can include, e.g., rendering data, lighting effects data, light attributes data, song data, beats data, visual marker data, preview data, block data, digital target data, lane data, audio waveform data, arc data, chain data, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. The HMD 200 includes a front rigid body 205 and a band 210. The front rigid body 205 includes one or more electronic display elements of an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in an artificial reality environment in three degrees of freedom (3DoF) or six degrees of freedom (6DoF). For example, the locators 225 can emit infrared light beams which create light points on real objects around the HMD 200. As another example, the IMU 215 can include e.g., one or more accelerometers, gyroscopes, magnetometers, other non-camera-based position, force, or orientation sensors, or combinations thereof. One or more cameras (not shown) integrated with the HMD 200 can detect the light points. Compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

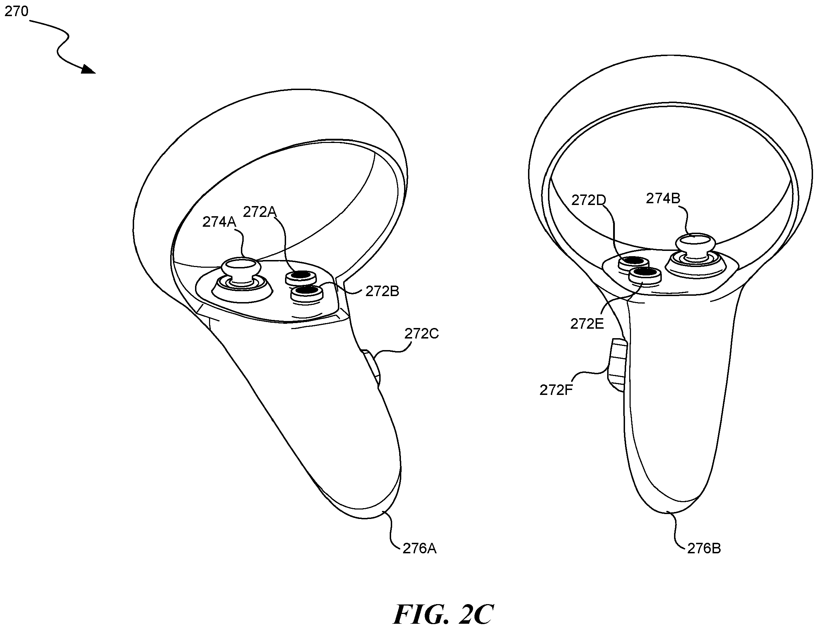

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

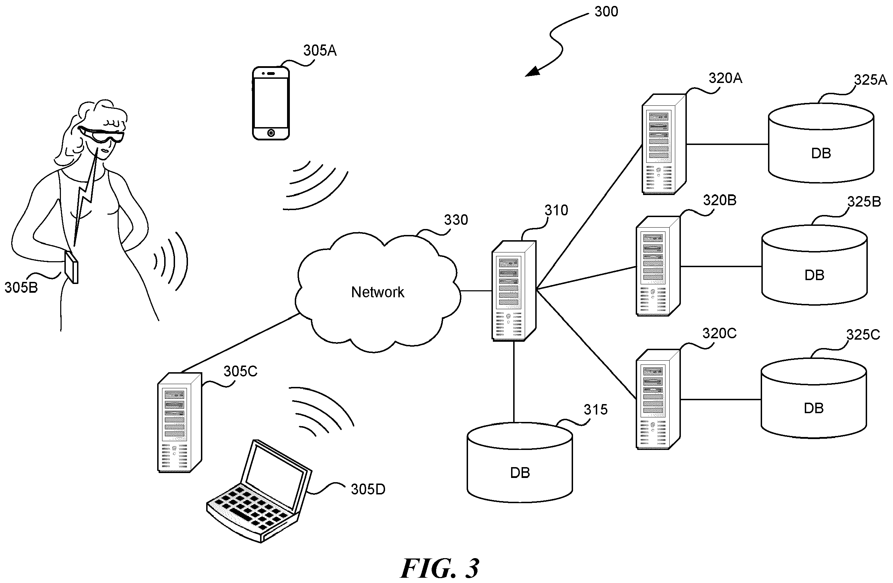

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

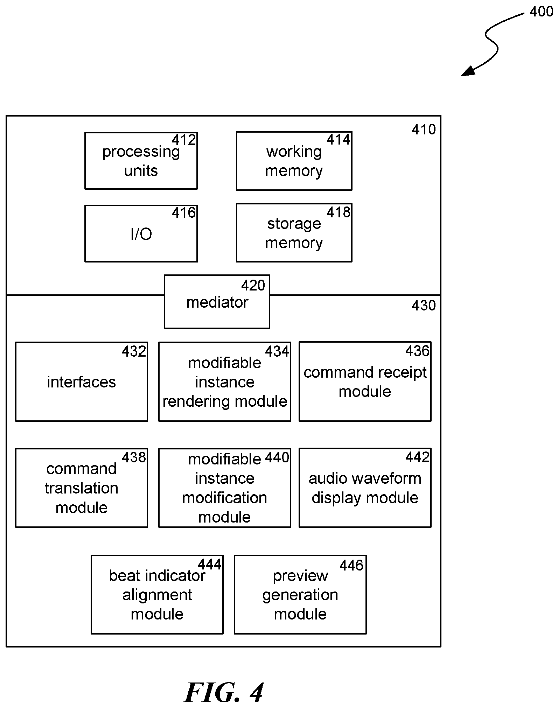

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for editing a three-dimensional (3D) virtual game space corresponding to a song. Specialized components 430 can include modifiable instance rendering module 434, command receipt module 436, command translation module 438, modifiable instance modification module 440, audio waveform display module 442, beat indicator alignment module 444, preview generation module 446, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

Modifiable instance rendering module 434 can render a modifiable instance of a three-dimensional (3D) virtual game space corresponding to a song. Modifiable instance rendering module 434 can render the modifiable instance by generating, receiving, and/or providing rendering data needed to generate a display of the modifiable instance. In some implementations, modifiable instance rendering module 434 can render the modifiable instance on a two-dimensional (2D) interface, such as a computing device (e.g., a desktop computer, a laptop, a tablet, etc.), a mobile device (e.g., a mobile phone), etc. In some implementations, modifiable instance rendering module 434 can render the modifiable instance on a three-dimensional (3D) interface, such as an artificial reality (XR) device.

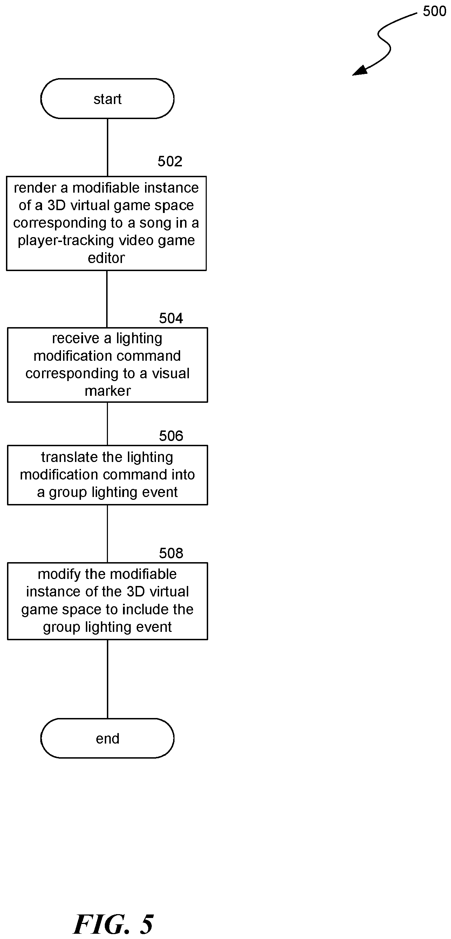

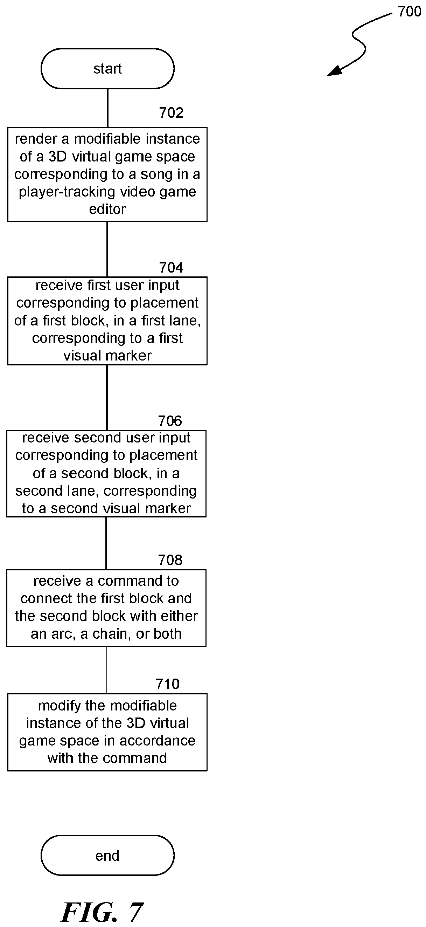

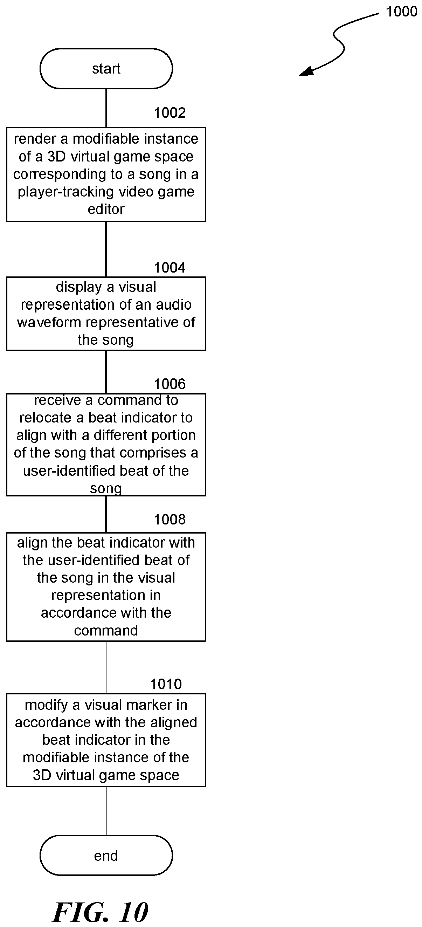

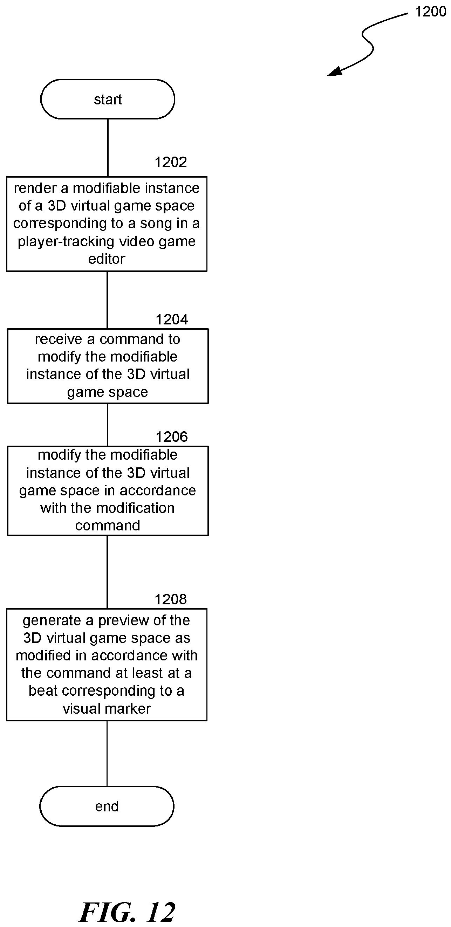

The modifiable instance can include multiple visual markers corresponding to respective beats of the song. In some implementations, each visual marker of the multiple visual markers can have modifiable elements. The modifiable elements can include, for example, lighting effects for lights controllable within the modifiable instance, blocks that are digital targets within the 3D virtual game space, connections between blocks (e.g., arcs and/or chains starting at, ending at, or overlapping the visual marker), and/or placement of the visual marker in the 3D virtual game space. Further details regarding rendering a modifiable instance of a 3D virtual game space corresponding to a song are described herein with respect to block 502 of Figure 5, block 702 of Figure 7, block 1002 of Figure 10, and block 1202 of Figure 12.

In some implementations in which a visual marker has lighting effects for lights controllable within the modifiable instance, command receipt module 436 can receive a lighting modification command corresponding to a visual marker of the multiple visual markers. The lighting modification command can be to add, edit, and/or remove one or more lighting effects corresponding to the visual marker. The lighting effects can include, for example, color, brightness, rotation, duration, filter, placement, scaling, strobing, movement, duplication, or any combination thereof. Further details regarding receiving a lighting modification command corresponding to a visual marker are described herein with respect to block 504 of Figure 5.

In some implementations in which command receipt module 436 receives a lighting modification command corresponding to a visual marker, command translation module 438 can translate the lighting modification command into a group lighting event. In some implementations, the group lighting event can control two or more lights (within the modifiable instance) relative to a beat of the song that corresponds to the visual marker. In some implementations, the group lighting event can control one or more lights (within the modifiable instance) of multiple beats of the song that correspond to respective visual markers including a visual marker corresponding a beat of the song. In other words, example translations of command translation module 438 can translate a single lighting modification command into instructions to modify a single light over multiple beats of a song and/or to modify multiple lights over one or multiple beats in a song. Thus, in some implementations, multiple lighting modification commands are not needed to control multiple lights and/or a single light over multiple beats of a song. Further details regarding translating a lighting modification command into a group lighting event are described herein with respect to block 506 of Figure 5.

In some implementations in which command translation module 438 translates a lighting modification command into a group lighting event, modifiable instance modification module 440 can modify the modifiable instance of the 3D virtual game space to include the group lighting event. For example, modifiable instance modification module 440 can add, edit, and/or remove lines of code (e.g., code that causes the 3D virtual game space to render) to add, edit, and/or remove lighting effects and/or lights within the 3D virtual game space. Thus, when the 3D virtual game space is previewed and/or executed in a player-tracking video game, the 3D virtual game space will appear as modified by the group lighting event. Further details regarding modifying a modifiable instance of the 3D virtual game space to include a group lighting event are described herein with respect to block 508 of Figure 5.

In some implementations, command receipt module 436 can receive user input corresponding to a placement of a block within the 3D virtual game space. The block can correspond to a digital target within the 3D virtual game space. Upon execution of the 3D virtual game space within the player-tracking video game, the digital target can be an area in which a player should interact with the block. In some implementations, the player can interact with the block by hitting, slashing, etc., the block with a hand, physical object, and/or virtual object via an XR device. In some implementations, command receipt module 436 can receive user input corresponding to placement of two blocks within the 3D virtual game space, each block corresponding to a digital target within the 3D virtual game space. Each block can be placed at a visual marker within the 3D virtual game space in a lane of multiple lanes intersecting with the visual markers. Further details regarding receiving user input corresponding to placement of blocks are described herein with respect to blocks 704-706 of Figure 7.

In some implementations in which command receipt module 436 receives user input corresponding to placement of a block, command receipt module 436 can further receive a command to connect two blocks within the 3D virtual game space. In some implementations, command receipt module 436 can receive a command to connect the two blocks with an arc. The arc can define a user input path between the two blocks, e.g., a path in which the player should maintain interaction between the two blocks. For example, the player can follow the arc with a hand, physical object, and/or virtual object via an XR device. In some implementations, command receipt module 436 can receive a command to connect the two blocks with a chain. The chain can include one or more additional digital targets between the two blocks. Thus, a gaming experience, generated during execution of the 3D virtual game space in the player-tracking video game, can provide user feedback in response to user interaction with the two blocks and the one or more additional digital targets between the two blocks, e.g., haptics effects at each block and each additional digital target. Further details regarding receiving a command to connect two blocks with either an arc, a chain, or both, are described herein with respect to block 708 of Figure 7.

In some implementations in which command receipt module 436 receives a command to connect two blocks, modifiable instance modification module 440 can modify the modifiable instance of the 3D virtual game space in accordance with the command. For example, modifiable instance modification module 440 can add, edit, and/or remove lines of code needed to render the 3D virtual game space to add the arc(s) and/or chain(s) to the 3D virtual game space. Conversely, if a user wishes to remove arc(s) and/or chain(s) from the 3D virtual game space, modifiable instance modification module 440 can add, edit, and/or remove lines of code (e.g., code that causes the 3D virtual game space to render the arc(s) and/or chain(s). Thus, when the 3D virtual game space is previewed and/or executed in conjunction with the song as a player-tracking video game, the 3D virtual game space will appear as modified by the command received by command receipt module 436. Further details regarding modifying a modifiable instance of the 3D virtual game space in accordance with a command to add an arc and/or a chain are described herein with respect to block 710 of Figure 7.

In some implementations, upon rendering a modifiable instance of a 3D virtual game space corresponding to a song (by modifiable instance rendering module 434), audio waveform display module 442 can display a visual representation of an audio waveform representative of the song. The visual representation can include beat indicators corresponding to visual markers within the 3D virtual game space. In some implementations, the beat indicators can be aligned with predicted beats of the song in the audio waveform, e.g., as predicted by an indicated beats-per-minute (BPM) of the song, as predicted by the changing amplitude of the audio waveform, etc. Further details regarding displaying a visual representation of an audio waveform representative of a song are described herein with respect to block 1004 of Figure 10.

In some implementations in which audio waveform display module 442 displays a visual representation of an audio waveform representative of a song, command receipt module 436 can receive a command to relocate a beat indicator to align with a different portion of the song that comprises a user-identified corresponding beat. For example, command receipt module 436 can receive the command to relocate the predicted beat indicator because the predicted beat indicator does not correspond to an actual beat of the song. In some implementations, the user-identified, corresponding beat can be identified at least partially from the visual representation of the audio waveform. For example, a user can visually identify a an actual corresponding beat of the song by locating spikes or peaks in amplitude of the visual representation of the audio waveform. In some implementations, the actual corresponding beat of the song can be identified automatically based on spikes, peaks, frequency, patterns, etc. in the visual representation of the audio waveform.

In some implementations, the corresponding beat can be identified at least partially from an audio sample of the audio waveform, e.g., by a user listening to the song and audibly identifying the corresponding beat. In some implementations, the corresponding beat can be identified with the assistance of a metronome played over the song at the predicted beats in the song. Further details regarding receiving a command to relocate a beat indicating to align with a different portion of the song that comprises a user-identified, corresponding beat are described herein with respect to block 1006 of Figure 10.

In some implementations in which command receipt module 436 receives a command to relocate a beat indicator to align with a different portion of the song that comprises a user-identified, corresponding beat, beat indicator alignment module 444 can align the beat indicator with the identified corresponding beat of the song in the visual representation in accordance with the command. For example, beat indicator alignment module 444 can move a beat indicator corresponding to an incorrect predicted beat to the actual, corresponding beat identified, at least partially, from the visual representation of the audio waveform. Further details regarding aligning a beat indicator with a user-identified corresponding beat of a song in a visual representation of an audio waveform in accordance with a command are described herein with respect to block 1008 of Figure 10.

In some implementations in which beat indicator alignment module 444 aligns a beat indicator with an identified corresponding beat of a song, modifiable instance modification module 440 can modify a visual marker in the 3D virtual game space, previously corresponding to an incorrect predicted beat, to instead correspond to the aligned beat indicator in the modifiable instance of the 3D virtual game space. For example, modifiable instance modification module 440 can add, edit, and/or remove lines of code (e.g., code that causes the 3D virtual game space to move the virtual marker to its corrected location corresponding to the aligned beat indicator). Thus, when the 3D virtual game space is previewed and/or executed, the 3D virtual game space will appear with the virtual marker in the correct location, i.e., corresponding to the actual beat of the song when played. Further details regarding modifying placement of a visual marker in the 3D virtual game space are described herein with respect to block 1010 of Figure 10.

In some implementations, command receipt module 436 can receive a command corresponding to one or more of A) adding, editing, or removing a lighting effect of multiple lighting effects corresponding to a visual marker of the multiple visual markers, B) adding, editing, or removing a block corresponding to the visual marker of the multiple visual markers, the block being a digital target of multiple digital targets in the three-dimensional virtual game space, C) connecting two blocks, at least one of the two blocks corresponding to the visual marker of the multiple visual markers, the two blocks being two respective digital targets of the multiple digital targets in the three-dimensional virtual game space, D) moving the visual marker of the multiple visual markers within the modifiable instance, or E) any combination thereof. Further details regarding receiving one or more of such commands are described herein with respect to block 1204 of Figure 12. In such implementations, modifiable instance modification module 440 can modify the modifiable instance of the 3D virtual game space in accordance with the command as described above, and as further described with respect to block 1206 of Figure 12.

In some implementations, preview generation module 446 can generate a preview of the 3D virtual game space as modified in accordance with a command received by command receipt module 436. For example, preview generation module 446 can show, in real-time or near real-time in some implementations, the effects of changes made to lighting effects, lights, blocks, arcs, chains, visual markers, beat indicators, etc. In some implementations, preview generation module 446 can generate the preview without requiring execution of the 3D virtual game space within the player-tracking video game. Further details regarding generating a preview of a 3D virtual game space as modified in accordance with a command are described herein with respect to block 1208 of Figure 12.

Those skilled in the art will appreciate that the components illustrated in Figures 1-4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

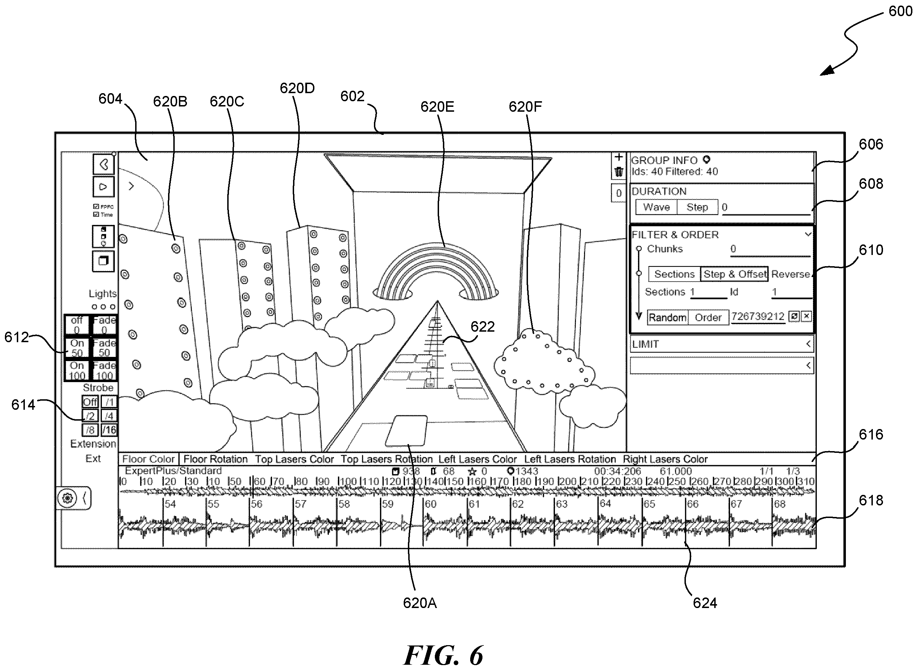

Figure 5 is a flow diagram illustrating a process 500 used in some implementations for editing a three-dimensional (3D) virtual game space corresponding to a song in a player-tracking video game editor. In some implementations, process 500 can be performed as a response to a user request to create and/or edit a 3D virtual game space. In some implementations, process 500 can be performed by a player-tracking video game editor. In some implementations, the player-tracking video game editor can be executed by a two-dimensional (2D) interface, such as a computing device, a mobile device, etc. In some implementations, the player-tracking video game editor can be executed by a three-dimensional (3D) interface, such as an XR device (e.g., an XR head-mounted display (HMD), such as HMD 200 of Figure 2A and/or HMD 252 of Figure 2B). In some implementations, process 500 can be performed by player-tracking video game editor system 164 of Figure 1. In some implementations, process 500 can be performed by specialized components 430 of Figure 4. In some implementations, process 500 can be performed by player-tracking video game editor 602 of Figure 6.

At block 502, process 500 can render a modifiable instance of a 3D virtual game space corresponding to a song in a player-tracking video game editor. The modifiable instance can include multiple visual markers indicating respective beats of the song. Each visual marker can have one or more lighting effects for multiple lights controllable within the modifiable instance. The lighting effects can include at least one of color, brightness, rotation, duration, filter, placement, scaling, strobing, movement, duplication, or any combination thereof, corresponding to each visual marker.

At block 504, process 500 can receive a lighting modification command corresponding to a visual marker of the multiple visual markers. The lighting modification command can be to add, edit, and/or remove one or more lighting effects corresponding to the visual marker in the modifiable instance at a beat corresponding to the visual marker. In some implementations, the lighting modification command can be generated based on user input, e.g., a user selecting an option to add, edit, and/or remove one or more lighting effects. In some implementations, the lighting modification command can be triggered automatically in response to one or more features of either the beat, the song, or both. For example, in some implementations, process 500 can analyze features of the beat (e.g., an instrument playing at the beat, a voice singing at the beat, etc.), features of the song (e.g., genre, beats-per-minute (BPM), etc.) in order to predict and/or automatically generate a lighting modification command. For example, process 500 can automatically generate, for an electronic dance music (EDM) song, a lighting modification command for strobing based on the genre, beats-per-minute, and any other suitable features of the EDM song.

At block 506, process 500 can translate the lighting modification command into a group lighting event. In some implementations, the group lighting event can control two or more lights of the multiple lights, within the modifiable instance, at a beat of the song corresponding to the visual marker. In some implementations, the group lighting event can control one or more lights of the multiple lights, within the modifiable instance, over multiple beats of the song corresponding to respective visual markers, with the multiple beats including the beat corresponding to the visual marker. In some implementations, the group lighting event can control tens or hundreds of lights.

In some implementations, the group lighting event can control at least one of color, brightness, rotation, duration, filtering, placement, scaling, strobing, movement, duplication, or any combination thereof, of two or more lights, or one or more lights over multiple beats of the song. For example, with respect to color, the group lighting event can change one or more lights from white to purple at one or more beats of the song. With respect to brightness, the group lighting event can turn one or more lights on or off, dim one or more lights, brighten one or more lights, etc., at one or more beats of the song. With respect to rotation, the group lighting event can change the orientation of one or more lights at one or more beats of the song, and, in some implementations, can cause rotation of one or more lights over multiple beats of the song. With respect to duration, the group lighting event can change how long a light is on or off and/or how long a particular modification to one or more lights is made.

With respect to filtering, the group lighting event can divide two or more lights up in different ways, such as into sections, to choose a specific light in a group, to omit certain lights in a group, to reverse the order of two or more lights that the lighting effect is applied to, etc. With respect to placement, the group lighting event can control where the lights are virtually placed within the 3D virtual game space. With respect to scaling, the group lighting event can control a size of one or more lights (e.g., control a linear transformation of one or more lights to enlarge or decrease their size). With respect to strobing, the group lighting event can control flashing, and, in some implementations, frequency of flashing, of one or more lights. With respect to duplication, the group lighting event can duplicate one or more lighting events to other lights within the 3D virtual game space.

In some implementations, the group lighting event can control one or more lights over multiple beats of the song, and/or two or more lights over one or more beats of the song, in different ways for different beats and/or the same beat, in response to process 500 receiving a single lighting modification command. For example, a user can make a lighting modification command to apply a certain brightness to a single light at a particular beat, and process 500 can translate the lighting modification command to apply fading to the light over subsequent beats. In another example, a user can make a lighting modification command to apply a certain brightness to a single light at a particular location, and process 500 can translate the lighting modification command to apply fading over adjacent lights as the lights appear further away.

At block 508, process 500 can modify the modifiable instance of the 3D virtual game space to include the group lighting event. In some implementations, process 500 can modify the modifiable instance of the 3D virtual game space by changing its underlying code that causes the group lighting event to render within the 3D virtual game space. In some implementations, process 500 can modify the modifiable instance of the 3D virtual game space by displaying the modifiable instance of the 3D virtual game space.

For example, in some implementations, process 500 can generate a preview of the 3D virtual game space including the group lighting event at least at the beat corresponding to the visual marker. The preview can be displayed from within the player-tracking video game editor. In some implementations, the preview of the 3D virtual game space including the group lighting event can include an audible sample of the song that comprises at least the beat corresponding to the visual marker having the corresponding modified lighting effect. In some implementations, the preview of the group lighting event can be synchronized with audio of the beat corresponding to the visual marker, such that the group lighting event can be seen while at least the corresponding beat of the song is played.

In some implementations, the preview can be displayed in real-time or near real-time as the modifications are made to the modifiable instance of the 3D virtual game space. In other words, in some implementations, process 500 can generate the preview instantaneously with the modification of the modifiable instance of the 3D virtual game space to include the group lighting event. Thus, in some implementations, a user modifying the 3D virtual game space does not need to exit the editor and execute the 3D virtual game space in order to see how the modifications look. In some implementations, the 3D virtual game space can be edited on a two-dimensional (2D) interface, such as a computing device, a mobile device, etc., and the preview can be displayed on the 2D interface. In some implementations, the preview can be generated from multiple angles within the 3D virtual game space, such that, for example, the user modifying the 3D virtual game space can envision the player-tracking video game in 3D, despite the 3D virtual game space being rendered in 2D. However, it is contemplated that, in some implementations, process 500 can be performed on a 3D interface, such as an XR device (e.g., XR HMD 200 of Figure 2A and/or XR HMD 252 of Figure 2B, and/or other components of an XR system, such as input components and/or processing components).

In some implementations, process 500 can store the 3D virtual game space including the group lighting event, either locally or on a cloud. Process 500 can transmit the stored 3D virtual game space including the group lighting event to a server hosting the player-tracking video game, such as on a cloud and/or on a computing system associated with the player-tracking video game application. One or more artificial reality (XR) devices (e.g., XR HMD 200 of Figure 2A and/or XR HMD 252 of Figure 2B, or other devices or components within an XR system) can access the stored 3D virtual game space via the host computer system and render the 3D virtual game space. In some implementations, the group lighting event can be dynamic based upon one or more detected contacts with a digital target associated with the visual marker corresponding to the group lighting event via respective XR devices (e.g., using a virtual saber or detected hand gesture). For example, the group lighting event can be rendered in a particular style based on, for example, the position, orientation, strength, placement, and/or the like, of the user's contact with the digital target.

In some implementations, multiple XR devices can access the 3D virtual game space via the host computing system and render the 3D virtual game space. In some implementations, the group lighting event can be rendered via a first rendering style in response to a first detected contact with a digital target associated with the visual marker, and rendered via a second rendering style in response to a second detected contact with the digital target. In some implementations, the first detected contact with the digital target can include at least one of angle of the first detected contact, placement of the first detected contact, orientation of the first detected contact, or any combination thereof, while the second detected contact with the digital target can include at least one of angle of the second detected contact, placement of the second detected contact, orientation of the second detected contact, or any combination thereof. For example, the first detected contact can be a slash across the digital target, while the second detected contact can be a skewering motion through the digital target. In such an example, the first rendering style can be a flash of white lights, while the second rendering style can be a change of color of lights. In some implementations, if no contact is detected, one or more lights may be omitted from rendering and/or one or more lighting effects can be rendered according to a different style (e.g., to darken or dim the lights).

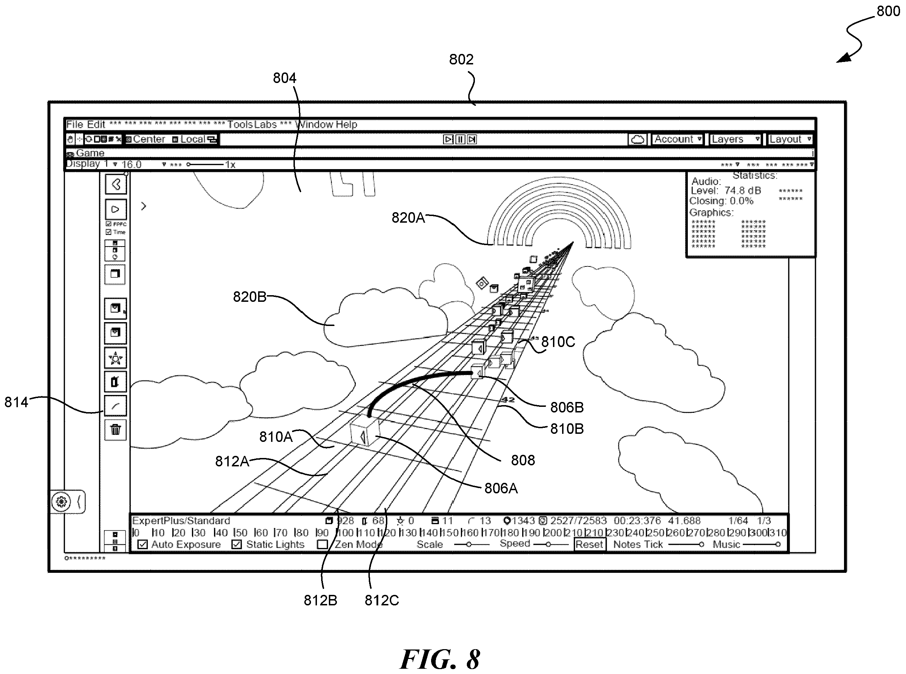

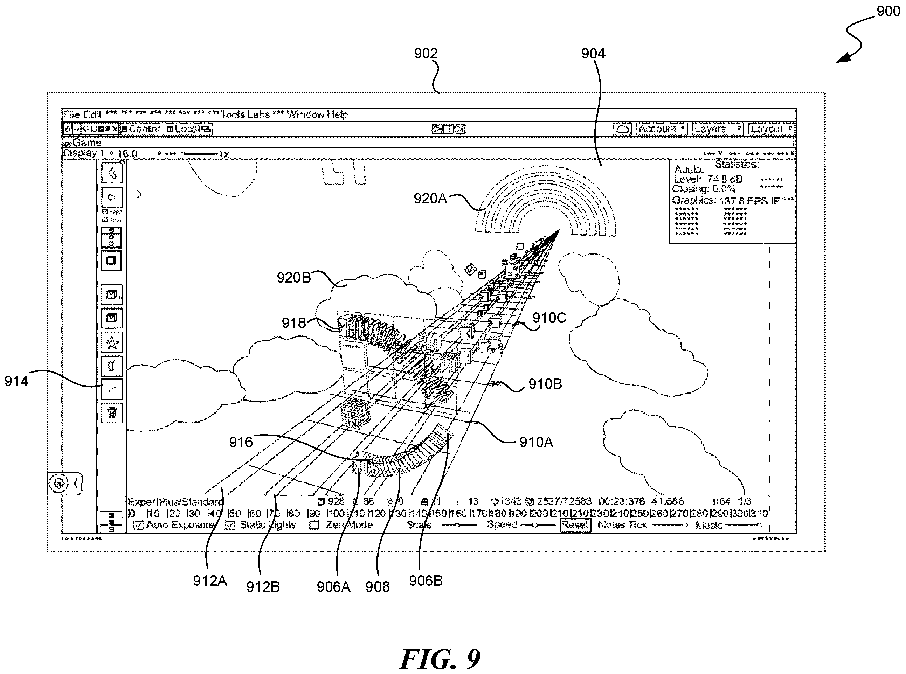

Figure 6 is a conceptual diagram illustrating an example preview 600 from a player-tracking video game editor 602 of lighting effect modifications in a three-dimensional (3D) virtual game space 604. In some implementations, player-tracking video game editor 602 can be similar to player-tracking video game editor 802 of Figure 8 and/or player-tracking video game editor 902 of Figure 9. In some implementations, preview 600 can include visual previews of 3D virtual game space 604 and audio waveform 618 of a song, to show how 3D virtual game space 604 will appear at a particular beat or beats of the song. In some implementations, 3D virtual game space 604 can include visual markers 622 corresponding to particular beats of the song that can also be represented by corresponding beat indicators 624 in the audio waveform 618 of the song.

In some implementations, preview 600 can further include an audible preview of the song played in conjunction with the visual preview of 3D virtual game space 604. 3D virtual game space 604 can include exemplary lights 620A-620F that can be modified, either individually or as a group, using player-tracking video game editor 602. In some implementations, a user can select which available lights to modify via light selection box 616, which can display options for floor color, floor rotation, top lasers color, top lasers rotation, left lasers color, left lasers rotation, right lasers color, etc.

In some implementations, player-tracking video game editor 602 can include group info 606 that can display how many lights are controlled by a single lighting modification command. In some implementations, player-tracking video game editor 602 can further include duration control 608 that can allow a user to specify how long a lighting modification should last. In some implementations, player-tracking video game editor 602 can further include filter and order controls 610 that can divide two or more lights up in different ways, such as into sections, to choose a specific light in a group, to omit certain lights in a group, to reverse the order of two or more lights that the lighting effect is applied to, etc.

In some implementations, player-tracking video game editor 602 can further include fade controls 612. Fade controls 612 can, for example, control fading of the brightness of one or more lights over multiple beats of a song and/or control fading of multiple lights at a particular beat of the song (e.g., fading of brightness from light 620B to light 620D). In some implementations, player-tracking video game editor 602 can further include strobe controls 614. Strobe controls 614 can control flashing, and, in some implementations, frequency of flashing, of one or more lights. Although illustrated as having particular controls in player-tracking video game editor 602, it is contemplated that any number of alternative or additional controls can be provided, such as placement controls, scaling controls, movement controls (e.g., to make one or more lights dynamic), duplication controls, etc. In some implementations, a user can control the scale and/or placement of one or more lights by selecting the one or more lights and making them bigger, smaller, or moving them, such as in a point-and-click operation. Further details regarding generating preview 600 are described herein with respect to Figure 12.

Figure 7 is a flow diagram illustrating a process 700 used in some implementations of the present technology for adding arcs and/or chains in a three-dimensional (3D) virtual game space. In some implementations, process 700 can be performed as a response to a user request to create and/or edit a 3D virtual game space. In some implementations, process 700 can be performed by a player-tracking video game editor. In some implementations, the player-tracking video game editor can be executed by a two-dimensional (2D) interface, such as a computing device, a mobile device, etc. In some implementations, the player-tracking video game editor can be executed by a three-dimensional (3D) interface, such as an XR device (e.g., an XR head-mounted display (HMD), such as HMD 200 of Figure 2A and/or HMD 252 of Figure 2B). In some implementations, process 700 can be performed by player-tracking video game editor system 164 of Figure 1. In some implementations, process 700 can be performed by specialized components 430 of Figure 4. In some implementations, process 700 can be performed by player-tracking video game editor 802 of Figure 8 and/or player-tracking video game editor 902 of Figure 9.

At block 702, process 700 can render a modifiable instance of a 3D virtual game space corresponding to a song in a player-tracking video game editor. The modifiable instance can include multiple visual markers corresponding to respective beats of the song. The multiple visual markers can intersect with multiple lanes, as shown in Figures 8 and 9 herein.

At block 704, process 700 can receive first user input corresponding to placement of a first block, in a first lane of the multiple lanes, corresponding to a first visual marker of the multiple visual markers. The first user input can be, for example, a point-and-click motion, a drag-and-release motion, etc. The first block can correspond to a first digital target of multiple digital targets in the 3D virtual game space. When the player-tracking video game is executed by an XR device, the first digital target can identify a location and/or direction at which the first block should be interacted with, e.g., hit or slashed.

At block 706, process 700 can receive second user input corresponding to placement of a second block, in a second lane of the multiple lanes, corresponding to a second visual marker of the multiple visual markers. The second user input can be, for example, a point-and-click motion, a drag-and-release motion, etc. The second block can correspond to a second digital target of the multiple digital targets in the 3D virtual game space. When the player-tracking video game is executed by an XR device, the second digital target can also identify a location and/or direction at which the second block should be interacted with, e.g., hit or slashed.

At block 708, process 700 can receive a command to connect the first block and the second block with either an arc, a chain, or both. The arc can define a user input path between the first block and the second block during execution of the 3D virtual game space. For example, a curved line connecting the first block and the second block can indicate to a player of the player-tracking video game that a virtual saber and/or the user's hand should interact with the first block and the second block by following the arc therebetween. In some implementations, such an arc can be used to emphasize longer notes in the song. Further details regarding an exemplary arc are described herein with respect to Figure 8.

The chain can include one or more additional digital targets of the multiple digital targets between the first block and the second block. Each digital target, including the first digital target and the second digital target, can have an associated visual, audio, and/or haptics effect. Thus, by interacting with the chain between the first block and the second block, multiple visual, audio, and/or haptics effects can be produced for the player playing the player-tracking video game. However, although described herein as the chain including a first block and a second block with multiple digital targets therebetween, it is contemplated that, in some implementations, process 700 can subdivide a single block into multiple digital targets. Further details regarding an exemplary chain are described herein with respect to Figure 9.

At block 710, process 700 can modify the modifiable instance of the 3D virtual game space in accordance with the command. In some implementations, process 700 can modify the modifiable instance of the 3D virtual game space by changing its underlying code that causes the arc(s) and/or chain(s) to render within the 3D virtual game space. In some implementations, process 700 can generate a preview of the 3D virtual game space as modified in accordance with the command at least at a beat corresponding to the first visual marker and a beat corresponding to the second visual marker. The preview can be displayed from within the player-tracking video game editor. In some implementations, the preview can be displayed in real-time or near real-time as the modifiable instance of the 3D virtual game space is modified.

In other words, in some implementations, process 700 can generate the preview instantaneously with the modification of the modifiable instance of the 3D virtual game space to include the arc(s) and/or chain(s). Thus, in some implementations, a user modifying the 3D virtual game space does not need to exit the editor and execute the 3D virtual game space in order to see how the modifications look. In some implementations, the 3D virtual game space can be edited on a two-dimensional (2D) interface, such as a computing device, a mobile device, etc., and the preview can be displayed on the 2D interface. In some implementations, the preview can be generated from multiple angles within the 3D virtual game space, such that, for example, the user modifying the 3D virtual game space can envision the player-tracking video game in 3D, despite the 3D virtual game space being rendered in 2D. However, it is contemplated that, in some implementations, process 700 can be performed on a 3D interface, such as an XR device.

In some implementations, process 700 can store the 3D virtual game space including the arc(s) and/or chain(s), either locally or on a cloud. Process 700 can transmit the stored 3D virtual game space including the arc(s) and/or chain(s) to a server hosting the player-tracking video game, such as on a cloud and/or on a computing system associated with the player-tracking video game application. One or more artificial reality (XR) devices (e.g., XR HMD 200 of Figure 2A and/or XR HMD 252 of Figure 2B, or other devices or components within an XR system) can access the stored 3D virtual game space via the host computer system and can render the 3D virtual game space.

In some implementations, the 3D virtual game space can be configured to generate, during execution, a gaming experience that receives one or more user interactions with the first block synchronized with a first beat of the song that corresponds to the first visual marker and the second block synchronized with a second beat of the song that corresponds to the second visual marker. In some implementations in which the command connects the first block and the second block with an arc, the gaming experience, generated during execution of the 3D virtual game space, can be configured to receive user interaction that traverses the user input path defined by the arc. In some implementations in which the command connects the first block and the second block with a chain, the gaming experience, generated during execution of the 3D virtual game space, can be configured to provide user feedback in response to user interaction with the first block, the additional digital targets, and the second block.

In some implementations, effects of interacting with the arc(s) and/or chain(s) can be the same regardless of the type, location, direction, etc., of a user interaction. In some implementations, effects of interacting with the arc(s) and/or chain(s) can be dynamic based upon one or more detected contacts with their associated digital targets via respective XR devices (e.g., using a virtual saber or detected hand gesture). For example, certain audio, visual, and/or haptics effects can be rendered in a particular style based on, for example, the position, orientation, strength, placement, and/or the like, of the user's virtual contact with the digital target.

In some implementations, multiple XR devices can access the 3D virtual game space via the host computing system and render the 3D virtual game space. In some implementations, effects associated with interaction with the arc(s) and/or chain(s) can be rendered via a first rendering style in response to a first detected contact with an arc or chain, and rendered via a second rendering style in response to a second detected contact with an arc or chain. In some implementations, the first detected contact with the arc(s) and/or chain(s) (e.g., digital targets associated with arc(s) and/or chain(s) can include at least one of angle of the first detected contact, placement of the first detected contact, orientation of the first detected contact, or any combination thereof, while the second detected contact with the arc(s) and/or chain(s) can include at least one of angle of the second detected contact, placement of the second detected contact, orientation of the second detected contact, or any combination thereof. For example, the first detected contact can be a slash through a chain, while the second detected contact can be a skewering motion through the chain. In such an example, the first rendering style can be strobing lighting effects, while the second rendering style can be a series of quick haptics effects.

Figure 8 is a conceptual diagram illustrating an example preview 800 from a player-tracking video game editor 802 of an arc 808 addition in a three-dimensional (3D) virtual game space 804. Player-tracking video game editor 802 can be similar to player-tracking video game editor 602 of Figure 6 and/or player-tracking video game editor 902 of Figure 9. In some implementations, preview 800 can include a visual preview of 3D virtual game space 804. In some implementations, preview 800 can further include a visual representation of an audio waveform (not shown) of a song, to show how 3D virtual game space 804 will appear at particular beat or beats of the song. In some implementations, 3D virtual game space 804 can include visual markers 810A, 810B, 810C, etc., corresponding to particular beats of the song (e.g., beat 41, beat 42, beat 43, etc.) that can also be represented by corresponding beat indicators (not shown) in some implementations. In some implementations, preview 800 can further include an audible preview of the song played in conjunction with the visual preview of 3D virtual game space 804. In some implementations in which modifications are made other than the addition of arc 808 (e.g., the addition and/or modification of lights 820A-B) at a particular beat or beats of the song corresponding to arc 808, preview 800 can also display such modifications.

3D virtual game space 804 can include blocks 806A, 806B, etc., placed by a user via player-tracking video game editor 802 that each indicate when, where, and how a player should interact with the blocks (e.g., via a hitting or slashing motion with a digital saber in a particular direction). In other words, blocks 806A, 806B, etc. can be digital targets. Blocks 806A-806B can be placed at a particular visual markers of visual markers 810A, 810B, 810C, etc., corresponding to particular beats in the song. In some implementations, block 806A-806B can be placed in particular lanes 812A, 812B, 812C, etc., corresponding to where blocks 806A-806B should be located in the player-tracking video game.

The user can connect blocks 806A and 806B, for example, with arc 808 via selection of block connector button 814. For example, the user can select block connector button 814, select an arc option, select block 806A (e.g., via a point-and-click operation), and drag the arc to end at block 806B. In some implementations, the user can further select and drag arc 808 to change the shape of arc 808 to any suitable 3D shape (e.g., a spiral shape). The arc can be configured to receive selection along its path by a player between block 806A and block 806B during execution of the player-tracking video game. Further details regarding generating preview 800 are described herein with respect to Figure 12.

Figure 9 is a conceptual diagram illustrating an example preview 900 from a player-tracking video game editor 902 of chain 916, 918 additions in a three-dimensional (3D) virtual game space 904. Player-tracking video game editor 902 can be the similar to player-tracking video game editor 602 of Figure 6 and/or player-tracking video game editor 802 of Figure 8. In some implementations, preview 900 can include a visual preview of 3D virtual game space 904. In some implementations, preview 900 can further include a visual representation of an audio waveform (not shown) of a song, to show how 3D virtual game space 904 will appear at a particular beat or beats of the song. In some implementations, 3D virtual game space 904 can include visual markers 910A, 910B, 910C, etc., corresponding to particular beats of the song (e.g., beat 41, beat 42, beat 43, etc.) that can also be represented by corresponding beat indicators (not shown) in some implementations. In some implementations, preview 900 can further include an audible preview of the song played in conjunction with the visual preview of 3D virtual game space 904. In some implementations in which modifications are made other than the addition of chains 916, 918 (e.g., the addition and/or modification of lights 920A-B) at a particular beat or beats of the song corresponding to chains 916, 918, preview 900 can also display such modifications.

3D virtual game space 904 can include blocks 906A, 906B, etc., placed by a user via player-tracking video game editor 902 that each indicate when, where, and how a player should interact with the blocks (e.g., via a hitting or slashing motion with a digital saber in a particular direction). In other words, blocks 906A, 906B, etc. can be digital targets. In some implementations, blocks 906A-906B can be placed at particular visual markers of visual markers 910A, 910B, 910C, etc., corresponding to particular beats in the song. In some implementations, however, it is contemplated that blocks 906A-906B can be placed between particular visual markers of visual markers 910A, 910B, 910C, etc., e.g., between beats of the song. In some implementations, blocks 906A-906B can be placed in particular lanes 912A, 912B, etc., corresponding to where blocks 906A-906B should be located in the player-tracking video game.

The user can connect blocks 906A and 906B, for example, with chain 916 via selection of block connector button 914. For example, the user can select block connector button 914, select a chain option, select block 906A (e.g., via a point-and-click operation), and drag chain 916 to end at block 906B. In some implementations, the user can further select and drag chain 916 to change the shape of chain 916 to any suitable 2D or 3D shape. Chain 916 can include multiple digital targets 908 between block 906A and block 906B. Each digital target of multiple digital targets 908 can have the same or different associated visual, audio, and/or haptics effect. Chain 916 can be configured to receive selection along its path by a player between block 906A and block 906B during execution of the player-tracking video game. Thus, by interacting with the chain between block 906A and block 906B, multiple visual, audio, and/or haptics effects can be produced for the player playing the player-tracking video game. In preview 900, chain 916 can be splayed over time, i.e., over more than one beat of the song. However, it is contemplated that in some implementations, a single block can be subdivided into multiple digital targets over a single point in time, e.g., a single beat or moment between beats, such as in chain 918. Further details regarding generating preview 900 are described herein with respect to Figure 12.

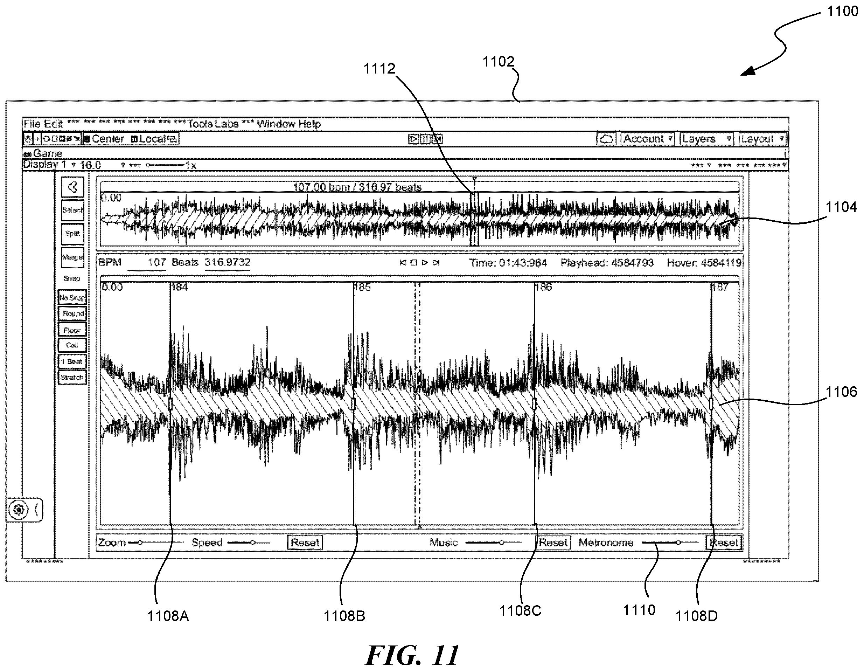

Figure 10 is a flow diagram illustrating a process 1000 used in some implementations of the present technology for correcting beat predictions for a song in a player-tracking video game. In some implementations, process 1000 can be performed as a response to a user request to create and/or edit a 3D virtual game space. In some implementations, process 1000 can be performed by a player-tracking video game editor. In some implementations, the player-tracking video game editor can be executed by a two-dimensional (2D) interface, such as a computing device, a mobile device, etc. In some implementations, the player-tracking video game editor can be executed by a three-dimensional (3D) interface, such as an XR device (e.g., an XR head-mounted display (HMD), such as HMD 200 of Figure 2A and/or HMD 252 of Figure 2B). In some implementations, process 1000 can be performed by player-tracking video game editor system 164 of Figure 1. In some implementations, process 1000 can be performed by specialized components 430 of Figure 4. In some implementations, process 1000 can be performed by player-tracking video game editor 602 of Figure 6, player-tracking video game editor 802 of Figure 8, player-tracking video game editor 902 of Figure 9, and/or BPM editor 1102 of Figure 11.

At block 1002, process 1000 can render a modifiable instance of a 3D virtual game space corresponding to a song in a player-tracking video game editor. The modifiable instance can include multiple visual markers corresponding to predicted beats of the song. The beats of the song can be predicted by, for example, accessing a published beats-per-minute (BPM) of the song, analyzing an audio waveform of the song to audibly identify the beats in the song (e.g., sounds corresponding to a drum beat), analyzing an audio waveform of the song to visually identify the beats in the song (e.g., corresponding to portions of the audio waveform having the highest amplitude), etc. In some implementations, the predicted beats of the song can likely be inaccurate, such as in a song having variable BPM or breaks within the song.

At block 1004, process 1000 can display a visual representation of an audio waveform representative of the song. The visual representation can include multiple beat indicators corresponding to respective visual markers of the multiple visual markers. The multiple beat indicators can be aligned with the predicted beats of the song in the audio waveform, such that the predicted beats of the song can be visualized along with the visualization of the audio waveform.

At block 1006, process 1000 can receive a command to relocate a beat indicator of the multiple beat indicators to align with a user-identified beat of the song, such that the beat indicator corresponds to the user-identified (e.g., actual) beat of the song. The user-identified corresponding beat of the song can be identified at least partially from the visual representation of the audio waveform. For example, a user can view the audio waveform alongside the predicted beat indicators and visually recognize that a predicted beat indicator is not aligned with a correct beat of the song (e.g., a beat having a highest amplitude in the visual representation of the audio waveform, a beat having a particular repetition or frequency in the visual representation of the audio waveform, etc.). Thus, the user can generate a command to relocate the beat indicator to align with the user-identified beat of the song, such that the beat indicator corresponding to the user-identified beat of the song.

At block 1008, process 1000 can align the beat indicator with the user-identified beat of the song in the visual representation in accordance with the command. Correspondingly, process 1000 can modify a visual marker of the multiple visual markers in accordance with the aligned beat indicator corresponding to the visual marker in the modifiable instance of the 3D virtual game space. Once the visual marker is aligned to represent the user-identified beat of the song, in some implementations, process 1000 can further modify the modifiable instance of the 3D virtual game space to add, edit, and/or remove blocks, lighting effects, arcs, chains, or any combination thereof, corresponding to the aligned visual marker and presentable at the user-identified beat of the song.

Figure 11 is a conceptual diagram illustrating an example view 1100 from a beats-per-minute (BPM) editor 1102 of a visual representation of an audio waveform 1104 corresponding to a song in a player-tracking video game. BPM editor 1102 can be included in a player-tracking video game editor, such as player-tracking video game editor 602 of Figure 6, player-tracking video game editor 802 of Figure 8, and/or player-tracking video game editor 902 of Figure 9. In some implementations, audio waveform 1104 can be a visual representation of the entire song, while audio waveform 1106 can be a zoomed-in visual representation of a portion of the song. For example, a user can select the portion of the song by dragging slider 1112 over audio waveform 1104 to the desired portion in order to generate a display of audio waveform 1106 of the portion of the song. Implementations of BPM editor 1102 can include or omit audio waveform 1104, audio waveform 1106, and/or any other suitable representation(s) of the song.

BPM editor 1102 can display audio waveform 1106 with beat indicators 1108A-1108D, which can be visual representations of where the predicted beats of the song are in audio waveform 1106. Beat indicators 1108A-1108D can correspond to respective visual markers in a preview of the player-tracking video game, such as in preview 600 of Figure 6, preview 800 of Figure 8, and/or preview 900 of Figure 9. For example, beat indicator 1108A can correspond to beat 184, and a corresponding visual marker can be labeled 184 in the preview corresponding to the same beat in the song. In some implementations, a user can drag one or more of beat indicators 1108A-1108D to identify a corresponding (e.g., actual) beat of the song where a predicted beat is incorrect. In some implementations, the user can identify the corresponding beat from the features of audio waveform 1106, such as by where the highest amplitudes of audio waveform 1106 are located.

In some implementations, BPM editor 1102 can further audibly play the song represented by audio waveform 1104, and in particular, the portion indicated in audio waveform 1106. Thus, the user can further audibly identify and/or confirm whether the predicted beat is correct, and adjust one or more of beat indicators 1108A-1108D if the predicted beat is incorrect. In some implementations, BPM editor 1102 can further include metronome 1110 to aid the user in audibly identifying whether the predicted beat is correct, and/or whether an adjusted beat indicator of beat indicators 1108A-1108D is correct. When the user adjusts one of beat indicators 1108A-1108D, a corresponding visual marker can also be adjusted in the preview of the player-tracking video game. Thus, blocks, lighting effects, arcs, chains, etc. can be aligned with the correct beat of the song within the player-tracking video game editor, such as player-tracking video game editor 602 of Figure 6, player-tracking video game editor 802 of Figure 8, and/or player-tracking video game editor 902 of Figure 9.

Figure 12 is a flow diagram illustrating a process 1200 used in some implementations of the present technology for previewing edits to a three-dimensional (3D) virtual game space. In some implementations, process 1200 can be performed as a response to a user request to create and/or edit a 3D virtual game space. In some implementations, process 1200 can be performed by a player-tracking video game editor. In some implementations, the player-tracking video game editor can be executed by a two-dimensional (2D) interface, such as a computing device, a mobile device, etc. In some implementations, the player-tracking video game editor can be executed by a three-dimensional (3D) interface, such as an XR device (e.g., an XR head-mounted display (HMD), such as HMD 200 of Figure 2A and/or HMD 252 of Figure 2B). In some implementations, process 1200 can be performed by player-tracking video game editor system 164 of Figure 1. In some implementations, process 1200 can be performed by specialized components 430 of Figure 4. In some implementations, process 1200 can be performed by player-tracking video game editor 602 of Figure 6, player-tracking video game editor 802 of Figure 8, and/or player-tracking video game editor 902 of Figure 9.

At block 1202, process 1200 can render a modifiable instance of a 3D virtual game space corresponding to a song in a player-tracking video game editor. The modifiable instance can include multiple visual markers corresponding to respective beats of the song. In some implementations, each visual marker can have addable, editable, and/or removable components, such as lighting effects, blocks, arcs, chains, etc.

At block 1204, process 1200 can receive a command to modify the modifiable instance of the 3D virtual game space. In some implementations, the command can correspond to A) adding, editing, or removing a lighting effect of multiple lighting effects corresponding to a visual marker of the multiple visual markers. The lighting effect can include at least one of color, brightness, rotation, duration, filter, placement, scaling, strobing, movement, duplication, or any combination thereof, corresponding to each visual marker. In some implementations, at least one lighting effect can correspond to a group lighting event. In some implementations, the group lighting event can control two or more lights of the multiple lights, within the modifiable instance, at a beat of the song corresponding to the visual marker. In some implementations, the group lighting event can control one or more lights of the multiple lights, within the modifiable instance, over multiple beats of the song corresponding to respective visual markers, with the multiple beats including the beat corresponding to the visual marker. Further details regarding A) adding, editing, or removing at least one lighting effect of multiple lighting effects corresponding to a visual marker of the multiple visual markers, are described herein with respect to Figure 5.

In some implementations, the command can correspond to B) adding, editing, or removing a block corresponding to a visual marker of the multiple visual markers. The block can be a digital target of multiple digital targets in the 3D virtual game space configured to be hit or slashed by a player when playing the player-tracking video game. In some implementations, the block can include an arrow indicating a direction in which the block should be hit or slashed by a player when playing the player-tracking video game. Further details regarding blocks and digital targets are described herein with respect to Further details regarding player-tracking video games can be found in U.S. Patent Application No. 16/195,498, filed November 19, 2018, entitled, "Player-tracking video game," which is herein incorporated by reference in its entirety.

In some implementations, the command can correspond to C) connecting two blocks, at least one of the two blocks corresponding to the visual marker of the multiple visual markers. The two blocks can be two respective digital targets of the multiple digital targets in the 3D virtual game space. In some implementations, the command can be to connect the two blocks with an arc and/or a chain. The arc can be configured to receive selection along its path between the first block and the second block during execution of the 3D virtual game space. For example, a curved line connecting the first block and the second block can indicate to a player playing the player-tracking video game that a virtual saber and/or the user's hand should interact with the first block and the second block by following the arc therebetween. The chain can include one or more additional digital targets of the multiple digital targets between the first block and the second block. Each digital target, including the first digital target and the second digital target, can have an associated visual, audio, and/or haptics effect. Further details regarding arcs and chains are described herein with respect to Figure 7.

In some implementations, the command can correspond to D) moving the visual marker of the multiple visual markers within the modifiable instance. In some implementations, process 1200 can relocate a visual marker of the multiple visual markers in accordance with a beat indicator manually aligned with a user-identified beat of the song (e.g., corresponding to an actual beat of the song), when the predicted beat of the song is incorrect. Further details regarding moving a visual marker to correspond with an aligned beat indicator are described herein with respect to Figure 10. In some implementations, the command can include any combination of A), B), C), or D) outlined above.

At block 1206, process 1200 can modify the modifiable instance of the 3D virtual game space in accordance with the command. In some implementations, process 1200 can modify the modifiable instance of the 3D virtual game space by changing its underlying code that causes the rendering of the modifications associated with A), B), C), D), or any combination thereof, as outlined above, within the 3D virtual game space.

At block 1208, process 1200 can generate a preview of the 3D virtual game space as modified in accordance with the command at least at a beat corresponding to the visual marker. The preview can be displayed from within the player-tracking video game editor. In some implementations, the preview of the 3D virtual game space can include an audible sample of the song that comprises at least the beat corresponding to the visual marker. In some implementations, the preview of the 3D virtual game space at the visual marker can be synchronized with audio of the beat corresponding to the visual marker.

In some implementations, process 1200 can store the 3D virtual game space including the modification(s), either locally or on a cloud. Process 1200 can transmit the stored 3D virtual game space including the modification(s) to a server hosting the player-tracking video game, such as on a cloud and/or on a computing system associated with the player-tracking video game application. One or more artificial reality (XR) devices (e.g., XR HMD 200 of Figure 2A and/or XR HMD 252 of Figure 2B, or other devices or components within an XR system) can access the stored 3D virtual game space via the host computer system and can render the 3D virtual game space. In some implementations, multiple XR devices can access the 3D virtual game space via the host computing system and render the 3D virtual game space.

Although illustrated in Figures 5, 7, 10, and 12 as separate flows, it is contemplated that process 500, process 700, process 1000, process 1200, or any combination thereof, can be performed together, in series, in parallel, simultaneously, and/or consecutively. In addition, when two or more of process 500, process 700, process 1000, or process 1200 are combined, it is contemplated that the steps thereof can be intermixed, and do not necessarily have to be performed in the orders illustrated in their respective Figures.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

Any patents, patent applications, and other references noted above are incorporated herein by reference. Aspects can be modified, if necessary, to employ the systems, functions, and concepts of the various references described above to provide yet further implementations. If statements or subject matter in a document incorporated by reference conflicts with statements or subject matter of this application, then this application shall control.

## Claims

1. A method for editing a three-dimensional virtual game space corresponding to a song in a player-tracking video game editor, the method comprising:
rendering a modifiable instance of the three-dimensional virtual game space corresponding to the song in the player-tracking video game editor, the modifiable instance including multiple visual markers corresponding to respective beats of the song, the multiple visual markers each having multiple lighting effects for multiple lights controllable within the modifiable instance;
receiving a lighting modification command corresponding to a visual marker of the multiple visual markers, the lighting modification command being to add, edit, or remove one or more lighting effects of the multiple lighting effects corresponding to the visual marker;
translating the lighting modification command into a group lighting event, the group lighting event controlling either A) two or more lights of the multiple lights, within the modifiable instance, at a beat of the song corresponding to the visual marker, B) one or more lights of the multiple lights, within the modifiable instance, over multiple beats of the song corresponding to respective visual markers, the multiple beats including the beat corresponding to the visual marker, or C) both;
modifying the modifiable instance of the three-dimensional virtual game space to include the group lighting event; and
generating a preview of the three-dimensional virtual game space including the group lighting event at least at the beat corresponding to the visual marker, the preview being displayed from within the player-tracking video game editor.

2. The method of claim 1, wherein the preview is generated from multiple angles within the three-dimensional virtual game space.

3. The method of claim 1 or claim 2,
wherein the three-dimensional virtual game space is edited on a two-dimensional interface, and
wherein the preview is displayed on the two-dimensional interface.

4. The method of any preceding claim, wherein the preview of the three-dimensional virtual game space including the group lighting event further includes an audible sample of the song that comprises at least the beat corresponding to the visual marker, the preview of the group lighting event being synchronized with audio of the beat corresponding to the visual marker.

5. The method of any preceding claim, wherein the preview is generated instantaneously with modification of the modifiable instance of the three-dimensional virtual game space to include the group lighting event.

6. The method of any preceding claim, wherein the group lighting event controls at least one of color, brightness, rotation, duration, filter, placement, scaling, strobing, duplication, or any combination thereof, of either A) the two or more lights of the multiple lights, within the three-dimensional virtual game space, at the beat of the song corresponding to the visual marker, B) the one or more lights of the multiple lights, within the three-dimensional virtual game space, over multiple beats of the song corresponding to respective visual markers, the multiple beats including the beat corresponding to the visual marker, or C) both.

7. The method of any preceding claim, wherein the lighting modification command is triggered automatically in response to one or more features of either the beat, the song, or both.

8. The method of any preceding claim, wherein the visual marker is associated with a digital target, and wherein the method further comprises:
storing the three-dimensional virtual game space including the group lighting event; and
transmitting the stored three-dimensional virtual game space including the group lighting event to a host computing system,
wherein one or more artificial reality devices access the stored three-dimensional virtual game space via the host computing system and render the three-dimensional virtual game space, and
wherein the group lighting event is dynamic based upon one or more detected contacts with the digital target via respective artificial reality devices.

9. The method of one of claims 1 to 8, wherein the visual marker is associated with a digital target, and wherein the method further comprises:
storing the three-dimensional virtual game space including the group lighting event; and
transmitting the three-dimensional virtual game space including the group lighting event to a host computing system,
wherein multiple artificial reality devices access the three-dimensional virtual game space via the host computing system and render the three-dimensional virtual game space, and
wherein the group lighting event is rendered via a first rendering style in response to a first detected contact with the digital target, and
wherein the group lighting event is rendered via a second rendering style in response to a second detected contact with the digital target; and optionally,
wherein the first detected contact with the digital target includes at least one of angle of the first detected contact, placement of the first detected contact, orientation of the first detected contact, or any combination thereof.

10. A computer-readable storage medium storing instructions that, when executed by a computing system, cause the computing system to perform a process for editing a three-dimensional virtual game space in a player-tracking video game editor, the process comprising:
rendering a modifiable instance of the three-dimensional virtual game space, the modifiable instance including multiple visual markers indicating respective beats of a song, the multiple visual markers each having multiple lighting effects for multiple lights controllable within the modifiable instance;
receiving a lighting modification command corresponding to a visual marker of the multiple visual markers, the lighting modification command being to add, edit, or remove the lighting effect corresponding to the visual marker in the modifiable instance at a beat corresponding to the visual marker;
translating the lighting modification command into a group lighting event, the group lighting event controlling two or more lights of the multiple lights at the beat corresponding to the visual marker; and
modifying the modifiable instance of the three-dimensional virtual game space to include the group lighting event.

11. The computer-readable storage medium of claim 10, wherein the process further comprises:
generating a preview of the three-dimensional virtual game space including the group lighting event at least at the beat corresponding to the visual marker, the preview being displayed from within the player-tracking video game editor.

12. The computer-readable storage medium of claim 12, wherein the process further comprises the method of any one of claims 3 to 9.

13. A computing system for editing a three-dimensional virtual game space in a player-tracking video game editor, the computing system comprising:
one or more processors; and
one or more memories storing instructions that, when executed by the one or more processors, cause the computing system to perform a process comprising:
rendering a modifiable instance of the three-dimensional virtual game space, the modifiable instance including multiple visual markers indicating respective beats of a song, the multiple visual markers each having multiple lighting effects for multiple lights controllable within the modifiable instance;
receiving a lighting modification command corresponding to a visual marker of the multiple visual markers, the lighting modification command being to add, edit, or remove the lighting effect corresponding to the visual marker in the modifiable instance at a beat corresponding to the visual marker;
translating the lighting modification command into a group lighting event, the group lighting event controlling two or more lights of the multiple lights at the beat corresponding to the visual marker; and
modifying the modifiable instance of the three-dimensional virtual game space to include the group lighting event.

14. The computing system of claim 13, wherein the process further comprises:
generating a preview of the three-dimensional virtual game space including the group lighting event at least at the beat corresponding to the visual marker, the preview being displayed from within the player-tracking video game editor.

15. The computing system of claim 14, wherein the process further comprises the method of any one of claims 3 to 9.
